# EUROPÄISCHE PATENTSCHRIFT

(11) **EP 2 744 770 B1**
(45) Veröffentlichungstag und Bekanntmachung des Hinweises auf die Patenterteilung: **10.01.2018**
(21) Anmeldenummer: 12748439.2
(22) Anmeldetag: 16.08.2012
(51) Int. Cl.: C04B 24/10

(54) **ENZYMATISCH INVERTIERTE SACCHAROSE ALS DISPERGIERMITTEL**
ENZYMATICALLY INVERTED SACCHAROSE AS DISPERSING AGENT
SACCHAROSE ENZYMATIQUE INVERSÉE COMME AGENT DE DISPERSION

(30) Priorität: 16.08.2011 EP 11177691
(43) Veröffentlichungstag der Anmeldung: 25.06.2014
(73) Patentinhaber: Sika Technology AG, 6340 Baar (CH)
(72) Erfinder: SCHOBER, Irene, 8008 Zürich (CH); GALLEGOS, Pedro, Sindempart Coquimbo Chile (CL); ARANCIBIA, Lili, Ñuñoa-Santiago (CL); OLIVARES, Hugo, Santiago Santiago Centro (CL); HAACK, Thomas, Ñuñoa Santiago de Chile (CL)
(74) Vertreter: Sika Patent Attorneys
(86) Internationale Anmeldenummer: PCT/EP2012/066026
(87) Internationale Veröffentlichungsnummer: WO 2013/024138

(56) Entgegenhaltungen:
- WO-A1-2005/110941
- DE-C- 585 586
- FR-A- 983 939
- US-A- 4 194 918
- US-A- 4 226 626

## Beschreibung

### Technisches Gebiet

Die Erfindung betrifft die Verwendung von enzymatisch invertierter Saccharose als Dispergiermittel für mineralische Bindemittel. Des Weiteren bezieht sich die Erfindung auf ein Dispergiermittel, eine Bindemittelzusammensetzung enthaltend das Dispergiermittel, sowie einen daraus erhältlichen ausgehärteten Formkörper. Ein weiterer Aspekt der Erfindung beinhaltet ein Verfahren zur Herstellung einer Bindemittelzusammensetzung.

### Stand der Technik

Ein wichtiges Zusatzmittel für in der Bauindustrie eingesetzte hydraulisch abbindende Zusammensetzungen, wie Zemente, Gipse und Kalk, sind Dispergiermittel, welche als Verflüssiger oder wasserreduzierende Mittel wirken. Der Einsatz solcher Dispergiermittel ist seit langem bekannt. Solche Verflüssiger, die im Allgemeinen organische Polymere sind, werden dem Anmachwasser zugesetzt oder als Feststoff den hydraulisch abbindenden Zusammensetzungen. Die Konsistenz der Zusammensetzung vor dem Abbinden wird dadurch in vorteilhafter Weise verändert. Insbesondere werden die Fliessgrenze und Viskosität verringert, wodurch die Verarbeitbarkeit verbessert wird. Der verflüssigende Effekt hält, je nach Dispergiermittel, relativ lange an, obwohl die Abbindezeit insgesamt nicht oder nur wenig erhöht ist. Durch die Verringerung des Wasseranteils wird die Festigkeit des ausgehärteten Betons verbessert.

Die gängigen Dispergiermittel für hydraulische Bindemittel wie Zement oder Gips sind Lignosulfonate, Naphthalinsulfonsäure-Formaldehyd Kondensate, sulfonierte Melamin-Formaldehyd Kondensate sowie Polycarboxylate. Alle diese Verflüssiger ausser den Lignosulfonaten basieren auf Rohstoffen, die aus Erdöl gewonnen werden.

Da Dispergiermittel in der Bauchemie in grossen Mengen eingesetzt werden, sind aus ökologischen und ökonomischen Gründen Dispergiermittel basierend auf nachwachsenden Rohstoffe oder Nebenprodukten von Industrieprozessen von Bedeutung. Bekannt sind beispielsweise Betonverflüssiger auf der Basis von Cellulose, Stärke, Lignosulfaten oder modifizierten saccharosehaltigen Zusammensetzungen, wie z.B. modifizierte Melasse.

Melasse fällt bei der Zuckerproduktion als Nebenprodukt in grossen Mengen an und ist weltweit kostengünstig erhältlich. Nebst der Hauptkomponente Saccharose beinhaltet Melasse unter anderem Dextrine, Milchsäure, Stickstoffverbindungen und anorganische Salze. US 4226626 und US 4194918 offenbaren zuckerhaltige Bindemittelzusammensetzungen. Die WO 2005/110941 A1 (Australian Industrial Additives) offenbart in diesem Zusammenhang z.B. die Verwendung von chemisch modifizierter Melasse als Verflüssiger für zementöse Zusammensetzungen. Dabei wird Melasse unter basischen oder sauren Bedingungen hydrolysiert, wodurch gegenüber unbehandelter Melasse eine verbesserte Verflüssigungswirkung erreicht wird. Wie sich gezeigt hat, neigt derart modifizierte Melasse jedoch schon nach wenigen Tagen zu relativ starker Sedimentation. Die gebildeten Sedimente können dabei die Verarbeitung sowie die Qualität von Bindemitteln beeinträchtigen oder die Wirkung von weiteren Zusatzmitteln vermindern. Zudem stellen die Sedimente unerwünschten Ballast dar, welcher unter anderem den Transportaufwand unnötig erhöht.

### Darstellung der Erfindung

Aufgabe der vorliegenden Erfindung ist es daher, ein Dispergiermittel auf der Basis von Saccharose bereit zu stellen, welches möglichst lagerstabil ist und bei Verwendung in mineralischen Bindemitteln eine möglichst gute Verflüssigungswirkung aufweist. Im Besonderen soll das Dispergiermittel eine verminderte Neigung zu Sedimentation aufweisen und möglichst gut kompatibel sein mit weiteren Zusatzmitteln.

Überraschenderweise wurde gefunden, dass die erfindungsgemässe Aufgabe gemäss Anspruch 1 durch Verwendung von enzymatisch invertierter Saccharose als Dispergiermittel gelöst werden kann. Die enzymatisch invertierte Saccharose wird bezogen auf das mineralische Bindemittel mit einem Anteil an enzymatisch invertierter Saccharose von 0.01 - 10 Gew.-%, verwendet. Der Anteil bezieht sich dabei insbesondere auf die enzymatisch invertierte Saccharose an sich, ohne weitere Substanzen wie z.B. Wasser.

Wie sich gezeigt hat, lässt sich bei der Verwendung von enzymatisch invertierter Saccharose als Dispergiermittel in mineralischen Bindemitteln eine sehr gute Verflüssigungswirkung erreichen. Zugleich weist die enzymatisch invertierte Saccharose im Vergleich mit chemisch invertierter Saccharose eine weitaus geringere Tendenz zur Sedimentbildung auf, was der Verarbeitbarkeit des mineralischen Bindemittels zu Gute kommt. Dies dürfte insbesondere auf den bei der enzymatischen Invertierung geringeren Anteil an unerwünschten Nebenprodukten zurückzuführen sein.

Des Weiteren hat sich enzymatisch invertierte Saccharose als besser kompatibel mit anderen Zusatzmitteln, z.B. bekannten Verflüssigern auf Basis von Polycarboxylaten, herausgestellt. Damit lassen sich Abmischungen von enzymatisch invertierter Saccharose mit anderen Zusatzmitteln herstellen, welche über eine verbesserte Lagerstabilität oder Wirkung verfügen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung von enzymatisch invertierter Saccharose als Dispergiermittel für ein mineralisches Bindemittel, insbesondere für ein zementöses Bindemittel.

Bei der enzymatischen Invertierung von Saccharose (auch als Sucrose bezeichnet) wird das Disaccharid Saccharose durch ein Enzym in die Monosaccharide D-Glucose und D-Fructose gespalten. Enzymatisch invertierte Saccharose enthält somit die Monosaccharide D-Glucose und D-Fructose, insbesondere mit gleichen Molanteilen, sowie gegebenenfalls das zur Invertierung bzw. Spaltung verwendete Enzym und/oder dessen Fragmente. Je nach Grad der Invertierung kann zudem auch ein Anteil nicht invertierter Saccharose vorliegen.

Die enzymatisch invertierte Saccharose lässt sich von chemisch invertierter Saccharose beispielsweise anhand der geringeren Anteile an Nebenprodukten unterscheiden. Des Weiteren ist enzymatisch invertierte Saccharose bis auf unvermeidbare Verunreinigungen im Wesentlichen frei von Sulfaten. Im Wesentlichen frei von Sulfaten meint dabei insbesondere, dass der Sulfatgehalt kleiner 0.5 Gew.-%, insbesondere kleiner als 0.1 Gew.-% ist. Dies steht im Gegensatz zu chemisch invertierter Saccharose, welche aufgrund der üblicherweise zur Invertierung eingesetzten Schwefelsäure im Allgemeinen einen hohen Sulfatanteil (mindestens 1 Gew.-%) aufweist. Ein hoher Sulfatanteil kann insbesondere in Bezug auf die Festigkeitsentwicklung von mineralischen Bindemitteln problematisch sein. Zudem sind beispielsweise Verflüssiger auf Basis von Polycarboxylatethern empfindlich gegenüber Sulfaten. Dadurch kann chemisch invertierte Melasse nur bedingt mit anderen Zusatzmitteln abgemischt werden.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Ein "zementöses Bindemittel" oder eine "zementöse Bindemittelzusammensetzung" meint vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker. Der Zementklinker ist bevorzugt ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil vorn ≥ 35 Gew.-%. Insbesondere ist der Zement vom Typ CEM I (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu wenigstens 95 Gew.-% aus hydraulischem Bindemittel, insbesondere aus Zementklinker.

Es kann aber auch vorteilhaft sein, wenn das Bindemittel oder die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 5 - 65 Gew.-%, im Speziellen 15 - 35 Gew.-%, latenthydraulische und/oder puzzolanische Bindemittel.

Als Enzym wird insbesondere eine Invertase eingesetzt. Mit anderen Worten ist die enzymatisch invertierte Saccharose insbesondere eine durch Invertase invertierte Saccharose. Invertase ist mit der EC-Nummer (Enzyme Commission number) 3.2.1.26 klassifiziert und gehört zur Kategorie der Glykosidasen. Andere Bezeichnugen für Invertase sind β-Fructofuranosidase, Saccharase oder Invertin.

Geeignete Temperaturen zur enzymatischen Invertierung von Saccharose liegen insbesondere im Bereich von 20 - 80ºC, bevorzugt 30 - 70ºC, im Besonderen 55 - 65ºC. Weiter wird die zu invertierende Saccharose mit Vorteil bei einem pH von 4 - 7, insbesondere 4.5 - 6.5, invertiert. Bei derartigen Bedingungen wird ein optimaler Umsatz an Saccharose mit minimalem Anteil an Enzym erreicht, was aus ökonomischen Gründen vorteilhaft ist.

Es sind aber prinzipiell auch andere Bedingungen möglich. Bei Temperaturen über 80ºC und/oder pH-Werten < 3 oder > 9 besteht jedoch die Gefahr der wenigstens teilweisen Denaturierung der Enzyme, was den Anteil an unerwünschten Nebenprodukten in der invertierten Saccharose unter Umständen erhöht.

Entsprechend ist die verwendete enzymatisch invertierte Saccharose bevorzugt eine bei einer Temperatur von 20 - 80ºC, insbesondere 30 - 70ºC, im Besonderen 55 - 65ºC, und/oder einem pH von 4 - 7, insbesondere 4.5 - 6.5, invertierte Saccharose.

Das verwendete Enzym bzw. die Invertase weist beispielsweise eine Aktivität im Bereich von 100'000 - 300'000 S.U., bevorzugt 180'000 - 220'000 S.U., im Speziellen 200'000 S.U., auf. 1 S.U. (Sumner Unit) ist dabei definiert als diejenige Menge an Enzym, welche innerhalb von 5 Minuten bei einer Temperatur von 20ºC und einem pH von 4.7 aus 6 ml einer 5.4%-igen Saccharoselösung 1 mg invertierte Saccharose freisetzt. Eine Konzentration der Invertase, insbesondere mit einer Aktivität von 200'000 S.U., beträgt mit Vorteil 10 - 100 mg pro 1 kg zu invertierende Saccharose (= 10 - 100 ppm). Bei Invertasen mit geringeren Aktivitäten kann die Konzentration entsprechend erhöht und bei Invertasen mit höheren Aktivitäten entsprechend reduziert werden.

Die zu invertierende Saccharose stammt vorteilhafterweise aus einer nachwachsenden Rohstoffquelle. Somit stammt auch die enzymatisch invertierte Saccharose insbesondere aus nachwachsenden Rohstoffen. Dies ist aus ökologischer und ökonomischer Sicht vorteilhaft.

Gemäss einer weiteren vorteilhaften Ausführungsform liegt die enzymatisch invertierte Saccharose als Bestandteil einer Zusammensetzung mit weiteren Substanzen vor.

Ein Anteil der enzymatisch invertierten Saccharose in der Zusammensetzung beträgt dabei im Besonderen wenigstens 20 Gew.-%, insbesondere wenigstens 30 Gew.-%, im Speziellen wenigstens 50 Gew.-%. Besonders bevorzugt bildet die enzymatisch invertierte Saccharose in der Zusammensetzung die Hauptkomponente oder diejenige Komponente mit dem grössten Gewichtsanteil.

Ein Gewichtsverhältnis von enzymatisch invertierter Saccharose zu nicht-invertierter Saccharose in der Zusammensetzung beträgt mit Vorteil wenigstens 0.5, insbesondere wenigstens 0.7, im Speziellen wenigstens 0.8 oder 0.9. Damit wird eine hohe Verflüssigungswirkung bei möglichst geringer Verzögerungswirkung erreicht.

Weiter kann die Zusammensetzung Wasser enthalten, insbesondere 5 - 70 Gew.-%, bevorzugt 10 - 50 Gew.-%, besonders bevorzugt 30 - 50 Gew.-%.

Entsprechend einer besonders bevorzugten Ausführungsform beinhaltet die Zusammensetzung enzymatisch invertierte Melasse oder die Zusammensetzung besteht daraus. Melasse ist mit relativ hohen Anteilen an Saccharose und weltweit kostengünstig erhältlich. Dadurch lassen sich aus Melasse wirksame Dispergiermittel in ökonomischer und ökologischer Weise herstellen.

Als besonders vorteilhaft hat sich enzymatisch invertierte Melasse aus Rübenzucker und/oder Rohrzucker erwiesen. Prinzipiell kann aber auch andere Melasse eingesetzt werden.

Für eine optimale Wirkung als Dispergiermittel weist die enzymatisch invertierte Saccharose und/oder die Zusammensetzung insbesondere einen pH-Wert von 4 - 8, bevorzugt 5 - 7, im Speziellen 5 - 6, auf.

Ein Sulfatgehalt der enzymatisch invertierten Saccharose oder der Zusammensetzung ist mit Vorteil kleiner als 5 Gew.-%, insbesondere kleiner als 1 Gew.-%, bevorzugt kleiner als 0.5 Gew.-%, noch mehr bevorzugt kleiner als 0.1 Gew.-%. Dies ist insbesondere im Hinblick auf die Festigkeitsentwicklung vorteilhaft und gewährleistet z.B. eine gute Kompatibilität mit Verflüssigern auf Basis von Polycarboxylatethern.

Gemäss einer weiteren vorteilhaften Ausführungsform beinhaltet die Zusammensetzung wenigstens ein Zusatzmittel für mineralische Bindemittel, beispielsweise ein Betonzusatzmittel und/oder ein Mörtelzusatzmittel. Das wenigstens eine Zusatzmittel umfasst insbesondere einen Entschäumer, einen Farbstoff, ein Konservierungsmittel, ein weiteres Dispergiermittel, einen Verzögerer, einen Luftporenbildner, einen Schwindreduzierer und/oder einen Korrosionsinhibitor oder Kombinationen davon.

Mit Vorteil wird die enzymatisch invertierte Saccharose in Kombination mit einem weiteren Dispergiermittel eingesetzt. Dieses beinhaltet im Speziellen ein Polycarboxylat, insbesondere einen Polycaboxylatether. Insbesondere ist das weitere Dispergiermittel ein Kammpolymer umfassend ein Polycarboxylatrückgrat mit daran gebundenen Polyetherseitenketten. Die Seitenketten sind dabei insbesondere über Ester-, Ether- und/oder Amidgruppen an das Polycarboxylatrückgrat gebunden.

Entsprechende Polycarboxylatether und Herstellungsverfahren sind beispielsweise offenbart in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden. Die Offenbarung dieser genannten Patentschriften wird hiermit insbesondere durch Bezugnahme eingeschlossen.

Derartige Kammpolymere werden auch von Sika Schweiz AG unter der Handelsnamenreihe ViscoCrete® kommerziell vertrieben.

Anstelle oder zusätzlich zu Polycarboxlaten oder Polycarboxylatethern können aber auch andere Verflüssiger, wie z.B. Lignosulfonate, Naphthalinsulfonsäure-Formaldehyd Kondensate, oder sulfonierte Melamin-Formaldehyd Kondensate eingesetzt werden. Dies kann aus ökonomischen oder ökologischen Gründen vorteilhaft sein.

Durch die Kombination von enzymatisch invertierter Saccharose und einem Zusatzmittel, insbesondere einem weiteren Dispergiermittel, lassen sich die Eigenschaften des Dispergiermittels bestmöglich an unterschiedliche Anforderungen anpassen.

In einer besonders bevorzugten Ausführungsform besteht die Zusammensetzung aus einer Mischung aus enzymatisch invertierter Melasse und einem weiteren Dispergiermittel, insbesondere einem Polycarboxylatether. Das weitere Dispergiermittel weist dabei in der Zusammensetzung beispielsweise einen Anteil von 1 - 80 Gew.-%, insbesondere 5 - 50 Gew.-% auf.

Die enzymatisch invertierte Saccharose oder die Zusammensetzung enthaltend dieselbe wird bezogen auf das mineralische Bindemittel bevorzugt mit einem Anteil an enzymatisch invertierter Saccharose von 0.5 - 5 Gew.-% verwendet. Der Anteil bezieht sich dabei insbesondere auf die enzymatisch invertierte Saccharose an sich, ohne weitere Substanzen wie z.B. Wasser. Ein zweiter Aspekt der vorliegenden Erfindung betrifft ein Dispergiermittel für ein mineralisches Bindemittel, umfassend enzymatisch invertierte Saccharose und ein weiteres Dispergiermittel. Ein Anteil der enzymatisch invertierten Saccharose im Dispergiermittel beträgt wenigstens 20 Gew.-%, insbesondere wenigstens 30 Gew.-%, im Speziellen wenigstens 50 Gew.-%. Die enzymatisch invertierte Saccharose ist dabei insbesondere wie vorstehend beschrieben definiert und kann optional auch Bestandteil einer Zusammensetzung sein und/oder ein Zusatzmittel enthalten, insbesondere einen Polycarboxylatether.

Ein dritter Aspekt der Erfindung betrifft eine Bindemittelzusammensetzung enthaltend ein mineralisches Bindemittel und ein Dispergiermittel umfassend enzymatisch invertierte Saccharose. Ein Anteil der enzymatisch invertierten Saccharose bezogen auf das mineralische Bindemittel beträgt insbesondere 0.01 - 10 Gew.-%, bevorzugt 0.5 - 5 Gew.-%. Der Anteil bezieht sich dabei insbesondere auf enzymatisch invertierte Saccharose an sich, ohne weitere Komponenten wie z.B. Wasser. Das mineralische Bindemittel und das Dispergiermittel sind dabei wie vorstehend beschrieben definiert. Die Bindemittelzusammensetzung kann z.B. in trockener Form oder als eine mit Anmachwasser angemachte fluide oder angesteifte Bindemittelzusammensetzung vorliegen.

In einer weiteren bevorzugten Ausführungsform enthält die Bindemittelzusammensetzung zusätzlich feste Aggregate, insbesondere Kies, Sand und/oder Gesteinskörnungen. Entsprechende Zusammensetzungen können beispielsweise als Mörtelmischungen oder Betonmischungen eingesetzt werden.

Insbesondere enthält die Bindemittelzusammensetzung zusätzlich Wasser, wobei ein Gewichtsverhältnis von Wasser zu mineralischem Bindemittel bevorzugt im Bereich von 0.25 - 0.8, insbesondere 0.3 - 0.7, bevorzugt 0.4 - 0.6, liegt. Derartige Bindemittelzusammensetzungen lassen sich als Mörtelmischungen oder Betonmischungen direkt verarbeiten.

Des Weiteren bezieht sich die Erfindung in einem dritten Aspekt auf einen Formkörper, welcher erhältlich ist durch Aushärten einer wie vorstehend beschriebenen Bindemittelzusammensetzung nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

Ein zusätzlicher Aspekt betrifft ein Verfahren zur Herstellung einer Bindemittelzusammensetzung wobei ein mineralisches Bindemittel mit enzymatisch invertierter Saccharose oder einer Zusammensetzung enthaltend derartige Saccharose vermischt wird. Die enzymatisch invertierte Saccharose kann z.B. dem Anmachwasser für die Bindemittelzusammensetzung zugemischt werden, welches anschliessend zum Anrühren der Bindemittelzusammensetzung verwendet wird. Auch möglich ist es, die enzymatisch invertierter Saccharose oder die Zusammensetzung enthaltend dieselbe direkt dem mineralischen Bindemittel beizugeben und gegebenenfalls später das Anmachwasser zuzumischen.

Aus den nachfolgenden Ausführungsbeispielen und der Gesamtheit der Patentansprüche ergeben sich weitere vorteilhafte Ausführungsformen und Merkmalskombinationen der Erfindung.

### Ausführungsbeispiele

### 1. Herstellung von enzymatisch invertierter Melasse

Zur Herstellung von enzymatisch invertierter Saccharose wurde unbehandelte Melasse aus der Zuckerherstellung aus Rohrzucker oder aus der Zuckerherstellung aus Zuckerrüben zu invertierter Melasse umgesetzt. Unbehandelte Melasse aus Rohrzucker weist dabei einen Saccharosegehalt von 30 - 40 Gew.-% auf, während Melasse aus Zuckerrüben über einen Saccharosegahelt von ca. 50 Gew.-% verfügt.

Unbehandelte Melasse (Feststoffanteil ca. 80 Gew.-%) wurde in einem heizbaren Reaktor unter Rühren mit Wasser verdünnt (0.60 Gewichtsteile Wasser pro Gewichtsteil Melasse). Anschliessend wurde der Reaktor auf eine vorgegebene Temperatur eingestellt (vgl. Tabelle 1) und 50 ppm (Gewichtsteile, bezogen auf Saccharose) Invertase (Aktivität: 200'000 S.U.; erhältlich z.B. bei BioCat GmbH Deutschland; gelöst in 500 ppm Wasser) zugesetzt. Das so erhaltene Reaktionsgemisch wurde anschliessend so lange bei der vorgegebenen Temperatur gehalten, bis mindestens 90% der in der Melasse ursprünglich vorhandenen Saccharose zu invertierter Saccharose umgewandelt war. Der Reaktionsverlauf wurde durch Fourier-Transformations-Infrarotspektroskopie anhand der Saccharose-Bande bei 984 cm⁻¹ verfolgt. Je nach Temperatur und pH-Wert betrug die benötigte Zeit zur Umwandlung von wenigstens 90% der Saccharose ca. 1 - 12 Stunden. Erhalten wurde jeweils eine Flüssigkeit mit im Wesentlichen homogener Konsistenz und einem Wassergehalt von ca. 30 - 50 Gew.-%. Der Anteil an invertierter Saccharose in der Zusammensetzung betrug jeweils ca. 30 Gew.-%. Der Sulfatgehalt der so hergestellten Melassen lag durchwegs unter 0.1 Gew.-%. Tabelle 1 gibt einen Überblick über verschiedenen enzymatisch hergestellten invertierten Melassen **A1 - C5**.

**Tabelle 1**

| **Versuch** | **Melasse¹⁾** | **T [ºC]** | **pH** | **Zeit [h:min]** | **Umwandlungssgrad [%]** |
|---|---|---|---|---|---|
| **A1** | Z, CL | 60 | 6.5 | 10:20 | 96 |
| **A2** | Z, CL | 60 | 4.5 | 04:29 | 100 |
| **B1** | Z, CL | 25 | 6.5 | 11:16 | 90 |
| **B2** | Z, CL | 35 | 6.5 | 08:45 | 90 |
| **B3** | Z, CL | 45 | 6.5 | 05:36 | 90 |
| **B4** | Z, CL | 55 | 6.5 | 03:18 | 90 |
| **B5** | Z, CL | 60 | 6.5 | 02:45 | 90 |
| **C1** | R, UAE | 60 | 4.6 | 01:12 | 90 |
| **C2** | R, BR | 60 | 5.0 | 01:30 | 90 |
| **C3** | R, MY | 60 | 5.3 | 02:30 | 90 |
| **C4** | Z, CL | 60 | 6.5 | 07:02 | 90 |
| **C5** | Z, TUR | 60 | 6.4 | 10:15 | 90 |

| | | | | | |
|---|---|---|---|---|---|
| ¹⁾ Z = Melasse aus Zuckerrüben, R = Melasse aus Rohrzucker CL: Herkunft Chile UAE: Herkunft Vereinigten Arabischen Emiraten BR: Herkunft Brasilien MY: Herkunft Malaysia TUR: Herkunft Türkei | | | | | |

Die in den Versuchen **A1** und **A2** verwendeten unbehandelten Melassen stammen beide aus derselben Quelle. In Versuch **A2** wurde die Melasse jedoch durch Zugabe von Schwefelsäure auf einen pH von 4.5 eingestellt, wodurch die Reaktionsgeschwindigkeit stark erhöht werden kann.

Die Versuche **B1 - B5** (alle mit derselben unbehandelten Melasse) zeigen, dass selbst bei niedrigen Temperaturen von 25ºC innert Tagesfrist ein Umwandlungsgrad von 90% erreichbar ist. Bei höheren Temperaturen kann die benötigte Zeit für die Invertierung der Melassen markant reduziert werden.

Die in den Versuchen **C1 - C5** verwendeten Melassen stammen aus unterschiedlichen Quellen und verfügen entsprechen über unterschiedliche pH-Werte. Dabei ist ersichtlich, dass insbesondere Melassen aus Rohrzucker (**C1** - **C3**) vorteilhaft sind, da diese aufgrund ihrer saureren Eigenschaften besonders effizient invertiert werden können.

### 2. Herstellung von chemisch invertierter Melasse (Vergleichsversuch)

Zu Vergleichszwecken wurde die bereits für die enzymatisch invertierte Melasse **C3** verwendete unbehandelte Melasse analog zur WO 2005/110941 A1 unter sauren Bedingungen umgesetzt. Dabei wurde die Melasse mit Schwefelsäure auf einen pH von ca. 3.2 eingestellt und so lange unter Rühren bei einer Temperatur von 100ºC gehalten bis 90% der in der Melasse vorhandenen Saccharose zu invertierter Saccharose umgewandelt war. Die so hergestellt chemisch invertierte Melasse wird mit **V1** bezeichnet.

### 3. Sedimentbildung

Proben der enzymatisch invertierten Melasse **C3** sowie der Vergleichsprobe **V1** wurden nach der Herstellung drei Tage stehen gelassen und anschliessend auf gebildete Sedimente untersucht. Hierzu wurden die in den Proben gebildeten Feststoffe abfiltriert und gewogen.

Die Vergleichsprobe **V1** wies dabei einen Sedimentanteil von 30 Vol.-% auf, während der Sedimentanteil bei der erfindungsgemässen enzymatisch invertierten Melasse **C3** lediglich 5 Vol.-% betrug.

### 4. Abmischungen aus Polycarboxylatether und invertierter Melasse

Um die Kompatibilität der enzymatisch invertierten Melasse mit herkömmlichen Dispergiermitteln zu untersuchen, wurden zwei verschiedene Mischungen (**M1** und **M2**) bestehend aus enzymatisch invertierter Melasse **C3** und einem kommerziellen Polycarboxylatether (Sikaplast 300 x-tend, erhältlich bei Sika Österreich) hergestellt. Zu Vergleichszwecken wurden zudem zwei entsprechende Mischungen (**M3** und **M4**) mit Substanz der Vergleichsprobe **V1** und demselben Polycarboxylatether bereitgestellt. Nach zwei Tagen wurden die hergestellten Mischungen optisch auf Sedimentbildung untersucht.

Tabelle 2 gibt einen Überblick über die Zusammensetzungen der Mischungen **M1 - M4** und deren Eigenschaften bezüglich Sedimentbildung.

**Tabelle 2**

| **Mischung** | **Melasse** | **Anteil Polycarboxylatether** [**Gew**.-**%]** | **Sedimentbildung** |
|---|---|---|---|
| **M1** | C3 | 5 | Nicht erkennbar |
| **M2** | C3 | 50 | Nicht erkennbar |
| **M3** | V1 | 5 | Sichtbar |
| **M4** | V1 | 50 | Sichtbar |

Enzymatisch invertierte Melasse (Mischungen **M1** und **M2**) ist demnach weitaus besser kompatibel mit Dispergiermitteln auf der Basis von Polycarboxylatethern als chemisch invertierte Melasse (Mischungen **M3** und **M4**).

### 5. Betonversuche

### 5.1 Betonzusammensetzung

Die Wirksamkeit der erfindungsgemässen enzymatisch invertierten Melasse wurde in Betonmischungen getestet. Hierfür wurde ein Beton mit der in Tabelle 3 spezifizierten Trockenzusammensetzung verwendet.

**Tabelle 3**

| **Komponente** | **Menge [kg/m3]** |
|---|---|
| Portlandzement | 300 |
| Sand 0-4 mm | 912 |
| Rundkies 4-20 mm | 988 |

Als Zement wurde ein Portlandzement (OPC Typ II) eingesetzt. Die Sande, die Gesteinskörnungen und der Zement wurden 1 Minute in einem Hobart-Mischer trocken gemischt. Innerhalb von 30 Sekunden wurde das Anmachwasser, in dem das Dispergiermittel gelöst oder dispergiert war, zugegeben und noch weitere 2.5 Minuten gemischt. Das Dispergiermittel wurde dabei als wässrige Lösung mit einem Anteil von 1.8 Gew.-% bezogen auf Zement eingesetzt. Die Gesamt-Mischzeit nass betrug jeweils 3 Minuten. Der Wasser/Zement-Wert (w/z-Wert) betrug durchwegs 0.64.

### 5.2 Testverfahren

Zur Bestimmung der Wirksamkeit der erfindungsgemässen Dispergiermittel wurde das Setzmass der Betonmischungen unmittelbar nach dem Anmachen, sowie nach 30 Minuten und nach 60 Minuten gemessen. Des Weiteren wurde die Druckfestigkeit der Betonmischungen 24 h Stunden bzw. 1 Tag (1d) sowie 7 Tage (7d) und 28 Tage (28d) nach dem Anmachen der Betonmischungen bestimmt.

Das Setzmass des Betons wurde gemäss BS EN 12350-2 bestimmt. Die Prüfung zur Bestimmung der Druckfestigkeit (in N/mm²) erfolgte gemäss Norm BS EN 12390-1 bis 12390-4.

### 5.3 Resultate

Tabelle 4 gibt einen Überblick über die Wirkungen und Eigenschaften der enzymatisch invertierten Melasse **C3** als Dispergiermittel in einer Betonmischung (Betonprobe **BV1**). Als Vergleich dazu wurde eine entsprechende Betonprobe **BV2** hergestellt, wobei als Dispergiermittel anstelle der enzymatisch invertierten Melasse **C3** chemisch invertierte Melasse **V1** verwendet wurde.

**Tabelle 4**

| | | **BV1** | **BV2** |
|---|---|---|---|
| Dispergiermittel | | **C3** | **V1** |
| Dichte [g/cm³] | | 2.371 | 2.385 |
| Setzmass [mm] | 0 min | 115 | 100 |
| | 30 min | 95 | 70 |
| | 60 min | 75 | 50 |
| Druckfestigkeit [MPa] | 1d | 11.1 | 10.2 |
| | 7d | 29.3 | 27.1 |
| | 28d | 33.3 | 33.1 |

Aus Tabelle 4 ist ersichtlich, dass enzymatisch inverte Melasse eine signifkant bessere Verflüssigungswirkung aufweist, als eine vergleichbare chemisch invertierte Melasse.

Die Druckfestigkeit der Betonprobe **BV1** mit enzymatisch inverter Melasse als Dispergiermittel ist zudem vergleichbar oder sogar höher, als die Druckfestigkeit der Betonprobe **BV2** welche chemisch invertierte Melasse als Dispergiermittel enthält.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verwendung von enzymatisch invertierter Saccharose als Dispergiermittel für ein mineralisches Bindemittel, wobei ein Anteil der enzymatisch invertierten Saccharose bezogen auf das mineralische Bindemittel 0.01 - 10 Gew.-% beträgt.

2. Verwendung nach Anspruch 1, **dadurch gekennzeichnet, dass** die enzymatisch invertierte Saccharose als Bestandteil einer Zusammensetzung mit weiteren Substanzen eingesetzt wird.

3. Verwendung nach Anspruch 2, **dadurch gekennzeichnet, dass** ein Anteil der enzymatisch invertierten Saccharose in der Zusammensetzung wenigstens 20 Gew.-%, insbesondere wenigstens 30 Gew.-%, im Speziellen wenigstens 50 Gew.-%, beträgt.

4. Verwendung nach einem der Ansprüche 2 - 3, **dadurch gekennzeichnet, dass** ein Gewichtsverhältnis von enzymatisch invertierter Saccharose zu nicht-invertierter Saccharose in der Zusammensetzung wenigstens 0.5, insbesondere wenigstens 0.7, im Speziellen wenigstens 0.8 beträgt.

5. Verwendung nach einem der Ansprüche 2 - 4, **dadurch gekennzeichnet, dass** die Zusammensetzung Wasser enthält, insbesondere 5 - 70 Gew.-%, bevorzugt 30 - 50 Gew.-%.

6. Verwendung nach einem der Ansprüche 2 - 5, **dadurch gekennzeichnet, dass** die Zusammensetzung enzymatisch invertierte Melasse beinhaltet oder daraus besteht.

7. Verwendung nach Anspruch 6, **dadurch gekennzeichnet, dass** die enzymatisch invertierte Melasse aus Rübenzucker und/oder Rohrzucker stammt.

8. Verwendung nach einem der vorangehenden Ansprüche, **dadurch gekennzeichnet, dass** die enzymatisch invertierte Saccharose oder die Zusammensetzung einen pH-Wert von 4 - 8, insbesondere 5 - 7, bevorzugt 5 - 6, aufweist.

9. Verwendung nach einem der Ansprüche 2 - 8, **dadurch gekennzeichnet, dass** ein Sulfatgehalt der Zusammensetzung kleiner als 5 Gew.-%, insbesondere kleiner als 2 Gew.-%, bevorzugt kleiner als 1 Gew.-%, noch mehr bevorzugt kleiner als 0.5 Gew.-%, ist.

10. Verwendung nach einem der Ansprüche 2 - 9, **dadurch gekennzeichnet, dass** die enzymatisch invertierte Saccharose in Kombination mit einem weiteren Dispergiermittel, insbesondere einem Polycarboxylat, verwendet wird.

11. Verwendung nach einem der vorangehenden Ansprüche, **dadurch gekennzeichnet, dass** ein Anteil der enzymatisch invertierten Saccharose bezogen auf das mineralische Bindemittel 0.5 - 5 Gew.-% beträgt.

12. Dispergiermittel für ein mineralisches Bindemittel umfassend enzymatisch invertierte Saccharose, wobei ein Anteil der enzymatisch invertierten Saccharose im Dispergiermittel wenigstens 20 Gew.-%, insbesondere wenigstens 30 Gew.-%, im Speziellen wenigstens 50 Gew.-%, beträgt und wobei zusätzlich ein weiteres Dispergiermittel vorliegt.

13. Dispergiermittel nach Anspruch 12, **dadurch gekennzeichnet, dass** das weitere Dispergiermittel ein Polycarboxylat ist.

14. Bindemittelzusammensetzung enthaltend ein mineralisches Bindemittel und ein Dispergiermittel nach einem der Ansprüche 12 - 13.

15. Formkörper, erhältlich durch Aushärten einer Bindemittelzusammensetzung nach Anspruch 14 nach Zugabe von Wasser.

16. Verfahren zur Herstellung einer Bindemittelzusammensetzung nach Anspruch 14, wobei ein mineralisches Bindemittel mit enzymatisch invertierter Saccharose und einem weiteren Dispergiermittel vermischt wird.

## Claims

1. Use of enzymatically inverted saccharose as a dispersant for a mineral binder, wherein a fraction of the enzymatically inverted saccharose in relation to the mineral binder amounts to 0.01 to 10 wt. %.

2. Use according to claim 1, **characterized in that** the enzymatically inverted saccharose is used as part of a composition with other substances.

3. Use according to claim 2, **characterized in that** a fraction of the enzymatically inverted saccharose in the composition amounts to at least 20 wt. %, especially at least 30 wt. %, particularly at least 50 wt. %.

4. Use according to one of claims 2 to 3, **characterized in that** a weight ratio of enzymatically inverted saccharose to noninverted saccharose in the composition amounts to at least 0.5, especially at least 0.7, particularly at least 0.8.

5. Use according to one of claims 2 to 4, **characterized in that** the composition contains water, especially 5 to 70 wt. %, preferably 30 to 50 wt. %.

6. Use according to one of claims 2 to 5, **characterized in that** the composition contains enzymatically inverted molasses or the composition consists of this.

7. Use according to claim 6, **characterized in that** the enzymatically inverted molasses comes from sugar beets and/or cane sugar.

8. Use according to one of the preceding claims, **characterized in that** the enzymatically inverted saccharose or the composition has a pH value of 4 to 8, especially 5 to 7, preferably 5 to 6.

9. Use according to one of claims 2 to 8, **characterized in that** a sulfate content of the composition is less than 5 wt. %, especially less than 2 wt. %, preferably less than 1 wt. %, even more preferably less than 0.5 wt. %.

10. Use according to one of claims 2 to 9, **characterized in that** the enzymatically inverted saccharose is used in combination with another dispersant, especially a polycarboxylate.

11. Use according to one of the preceding claims, **characterized in that** a fraction of the enzymatically inverted saccharose in relation to the mineral binder amounts to 0.5 to 5 wt. %.

12. Dispersant for a mineral binder comprising enzymatically inverted saccharose, wherein a fraction of the enzymatically inverted saccharose in the dispersant amounts to at least 20 wt. %, especially at least 30 wt. %, particularly at least 50 wt. %, and wherein a further dispersant is additionally present.

13. Dispersant according to claim 12, **characterized in that** the further dispersant is a polycarboxylate.

14. Binder composition containing a mineral binder and a dispersant according to one of claims 12 to 13.

15. Molded body, obtainable by hardening of a binder composition according to claim 14, after adding water.

16. Method for preparing a binder composition according to claim 14, wherein a mineral binder is mixed with enzymatically inverted saccharose and a further dispersant.

## Revendications

1. Utilisation de saccharose inverti par voie enzymatique, en tant que dispersant pour un liant minéral, la proportion du saccharose inverti par voie enzymatique par rapport au liant minéral valant de 0,01 à 10 % en poids.

2. Utilisation selon la revendication 1, **caractérisée en ce qu'**on utilise le saccharose inverti par voie enzymatique en tant que composant d'une composition avec d'autres substances.

3. Utilisation selon la revendication 2, **caractérisée en ce que** la proportion du saccharose inverti par voie enzymatique dans la composition est d'au moins 20 % en poids, en particulier d'au moins 30 % en poids, plus particulièrement d'au moins 50 % en poids.

4. Utilisation selon l'une quelconque des revendications 2 et 3, **caractérisée en ce que** le rapport pondéral du saccharose inverti par voie enzymatique au saccharose non inverti dans la composition vaut au moins 0,5, en particulier au moins 0,7, plus particulièrement au moins 0,8.

5. Utilisation selon l'une quelconque des revendications 2 à 4, **caractérisée en ce que** la composition contient de l'eau, en particulier 5 - 70 % en poids, de préférence 30 - 50 % en poids.

6. Utilisation selon l'une quelconque des revendications 2 à 5, **caractérisée en ce que** la composition comporte de la mélasse invertie par voie enzymatique ou consiste en celle-ci.

7. Utilisation selon la revendication 6, **caractérisée en ce que** la mélasse invertie par voie enzymatique provient de sucre de betterave et/ou de sucre brut.

8. Utilisation selon l'une quelconque des revendications précédentes, **caractérisée en ce que** le saccharose inverti par voie enzymatique ou la composition présente un pH de 4 - 8, en particulier de 5 - 7, de préférence de 5 - 6.

9. Utilisation selon l'une quelconque des revendications 2 à 8, **caractérisée en ce que** la teneur en sulfate de la composition est inférieure à 5 % en poids, en particulier inférieure à 2 % en poids, de préférence inférieure à 1 % en poids, de façon encore plus particulièrement préférée inférieure à 0,5 % en poids.

10. Utilisation selon l'une quelconque des revendications 2 à 9, **caractérisée en ce qu'**on utilise le saccharose inverti par voie enzymatique en association avec un autre dispersant, en particulier un polycarboxylate.

11. Utilisation selon l'une quelconque des revendications précédentes, **caractérisée en ce que** la proportion du saccharose inverti par voie enzymatique par rapport au liant minéral vaut de 0,5 à 5 % en poids.

12. Dispersant pour un liant minéral, comprenant du saccharose inverti par voie enzymatique, la proportion du saccharose inverti par voie enzymatique dans le dispersant valant au moins 20 % en poids, en particulier au moins 30 % en poids, plus particulièrement au moins 50 % en poids et un autre dispersant étant en outre présent.

13. Dispersant selon la revendication 12, **caractérisé en ce que** l'autre dispersant est un polycarboxylate.

14. Composition de liant contenant un liant minéral et un dispersant selon l'une quelconque des revendications 12 et 13.

15. Corps moulé, pouvant être obtenu par durcissement d'une composition de liant selon la revendication 14 après addition d'eau.

16. Procédé pour la préparation d'une composition de liant selon la revendication 14, dans lequel on mélange un liant minéral avec du saccharose inverti par voie enzymatique et un autre dispersant.
